Europäisches Patentamt

European Patent Office

Office européen des brevets

(19)

(11) Veröffentlichungsnummer : **0 324 149 B1**

(12) # EUROPÄISCHE PATENTSCHRIFT

(45) Veröffentlichungstag der Patentschrift :
16.10.91 Patentblatt 91/42

(51) Int. Cl.$^5$ : **C02F 1/04, B01D 3/34**

(21) Anmeldenummer : **88121467.0**

(22) Anmeldetag : **22.12.88**

(54) **Verfahren zur Entsorgung von Härtereiabwässern durch Eindampfen.**

(30) Priorität : **06.01.88 DE 3800143**

(43) Veröffentlichungstag der Anmeldung :
**19.07.89 Patentblatt 89/29**

(45) Bekanntmachung des Hinweises auf die
Patenterteilung :
**16.10.91 Patentblatt 91/42**

(84) Benannte Vertragsstaaten :
**AT BE CH DE ES FR GB GR IT LI LU NL SE**

(56) Entgegenhaltungen :
**DE-A- 13 939**
**FR-A- 601 554**
**US-A- 3 995 298**
**US-A- 4 308 111**
**US-A- 4 724 044**

(73) Patentinhaber : **Degussa Aktiengesellschaft**
**Weissfrauenstrasse 9**
**W-6000 Frankfurt am Main 1 (DE)**

(72) Erfinder : **Preisser, Friedrich, Dr. Dipl.-Phys.**
**Am Hellerberg**
**W-6470 Büdingen (DE)**

## Beschreibung

Die Erfindung betrifft ein Verfahren zur Entsorgung von Härtereiabwässern mit hoher Cyanid- und/oder Cyanatbelastung durch Eindampfen der Flüssigkeit in einem Behälter und Beseitigung des verbleibenden Rückstands, wobei zur Eindampfung die Wärmezufuhr über die freie Flüssigkeitsoberfläche erfolgt und über die freie Flüssigkeitsoberfläche ein Luftvolumenstrom geleitet wird, dessen Wasserdampfaufnahmekapazität größer ist als es der durch die Wasserzufuhr freigesetzten Dampfmenge entspricht.

Unter Härtereiabwässern werden salzfrachtbeladene Spülwasser verstanden. Nach thermischer oder thermochemischer Salzbadbehandlung von Stählen, wie z.B. Karburieren, Nitrokarburieren, Glühen oder Anlassen, werden die Stahlchargen mit Wasser gereinigt, um die unter Sauerstoffzutritt korrosiv wirkenden Behandlunssalze zu entfernen. Die Spülwasser aus verschiedenen Behandlungsverfahren werden üblicherweise in Härtereibetrieben zu einem Gesamtstrom zusammengeführt. Diese Mischabwässer müssen jedoch einer geeigneten Behandlung unterzogen werden, bevor sie dem Abwassernetz zugeführt werden dürfen, um sie von der Salzbeladung und teilweise toxischen Substanzen zu befreien.

Zur Abwasserbehandlung sind chemische und physikalische Verfahren bekannt. Bei der chemischen Aufbereitung wird durch chemische Zusätze das Wasser neutralisiert und Teile der Salzfracht als schwer lösliche Bestandteile gefällt. Bei den physikalischen Verfahren wird das Wasser verdampft und die zurückbleibende Salzsole entfernt bzw. auf chemischem Wege zu unschädlichen Produkten aufoxidiert.

Es ist bekannt, Spülwasser in einem Tiegelofen oder speziellen Verdampferanlagen zu verdampfen. Da Härtereisalze meist aus Chloriden und Karbonaten bestehen, kristallisieren diese Produkte bevorzugt an den Wänden der Behälter aus. Die Salzkristalle haften sehr fest an den Wänden (Verkrustung), so daß sie sich nur schwer entfernen lassen. Gleichzeitig wirken sie isolierend, so daß sie den Wärmestrom vom Energieträger auf das zu verdampfende Abwasser vermindern. Beim derzeitigen Stand der Technik erhöht man deshalb zur Salzentfernung die Temperatur der Verdampferanlage — z.B. des Tiegels — stetig, bis der Schmelzpunkt der Mischsalze überschritten wird (typisch 250°C–400°C). Das geschmolzene Mischsalz wird dann ausgeschöpft. Nachteil dieses Vorgehens ist, daß es bei steigender Temperatur bei cyanidhaltigen Abwässern zu chemischen Zersetzungen in der Salzsole kommt. Dabei entstehen Blausäure und Ammoniak, die über den Brüdendampf aus dem Verdampfersystem herausgetragen werden.

Weiterhin ist bekannt, Härtereiabwässer in eine Salzschmelze bei Temperaturen von 300 bis 400°C einzuleiten.

Der Wasseranteil verdampft, die toxischen Bestandteile der Salzsole werden durch das vorgelegte Salz chemisch gebunden (meist Oxidation, z.B. der Cyanide zu Karbonaten). Nachteilig ist ebenfalls die Anreicherung des Brüdendampfes mit Blausäure und Ammoniak, sowohl als Aerosol als auch als Gas. Die Aerosolbelastung ist bei diesem Verfahren hoch, da die Verdampfung wegen des hohen Temperaturunterschiedes zwischen Salzschmelze und zugeführtem Abwasser sehr heftig ist und die notwendige chemische Reaktion Vorlagesalz-Mischsalz im Abwasser nicht vollständig abläuft.

In der US-A-4,308,111 wird ein Destillationsverfahren zur Herstellung von reinem Wasser beschrieben, bei der die Eindampfung durch Wärmezufuhr über die freie Flüssigkeitsoberfläche erfolgt und ein Luftstrom den Wasserdampf in einen Kondensator überführt. Auf Härtereiabwässer, die Cyanide und Cyanate enthalten, ist dieses Verfahren nicht direkt übertragbar.

Es war daher Aufgabe der vorliegenden Erfindung, ein Verfahren zur Entsorgung von Härtereiabwässern mit hoher Cyanid- und/oder Cyanatbelastung zu entwickeln, durch Eindampfen der Flüssigkeit in einem Behälter und Beseitigung des verbleibenden Rückstandes, bei dem der Brüdendampf frei ist von giftigen Gasen und die verbleibenden Rückstände sich leicht aus dem Behälter entfernen lassen, wobei zur Eindampfung die Wärmezufuhr über die freie Flüssigkeitsoberfläche erfolgt und über die freie Flüssigkeitsoberfläche ein Luftvolumenstrom geleitet wird, dessen Wasserdampfaufnahmekapazität größer ist als es der durch die Wasserzufuhr freigesetzten Dampfmenge entspricht.

Diese Aufgabe wird erfindungsgemäß dadurch gelöst, daß die Temperatur in einer Oberflächenschicht der Flüssigkeit von 5 mm auf 50 bis 85°C gehalten wird.

Zur Durchführung des Verfahrens verwendet man vorzugsweise flache Wannen, über denen man in einigem Abstand flächige Infrarotstrahlungsquellen anbringt. Der Abstand Flüssigkeitsoberfläche zur Strahlungsquelle beträgt beispielsweise 200 bis 400 mm bei einer Flächenstrahlungsleistung von etwa 20 $kW/m^2$. Der Wasserentzug erfolgt durch Verdunstung an der Oberfläche, wobei die auskristallisierenden Salzpartikel auf dem relativ kalten Boden der Wanne sedimentieren, wo sie ohne Verkrustung leicht entfernt werden können. Die Flächenstrahlleistung ist dabei so zu wählen, daß ausschließlich eine kontrollierte Verdunstung erfolgt. Dadurch stellt sich eine konstante Abwassertemperatur von beispielsweise ca. 70°C ein, bei der chemische Zersetzungsreaktionen vernachlässigbar sind und das Austreten von HCN und $NH_3$ ausgeschlossen ist.

Über die Flüssigkeitsoberfläche wird Umgebungsluft gesaugt, die den austretenden Wasserdampf aufnimmt. Der Luftmengenstrom ist derart bemessen, daß die Aufnahmekapazität für Wasserdampf wesentlich größer ist als die durch die Infrarotstrahlungsleistung freigesetzte Dampfmenge. Dadurch ist die Verdunstungsleistung der Anlage unabhängig von Schwankungen der relativen Feuchtigkeit der Umgebungsluft.

Bei den o.g. Leistungsdaten hat sich ein Volumenstrom von 700 Nm³/(h.m²) bis 1200 Nm³/(h.m²) bewährt.

Das Salzsediment kann ohne Mühe als pastöser Brei entfernt und beispeilsweise in Altsalzfässer abgefüllt werden. Der Verdünstungsrückstand verkrustet nicht, weil das Salz ausschließlich durch Schweresedimentation entstanden ist und der Wasseranteil im Sediment relativ hoch ist. Die Salzkristalle lösen sich daher leicht vom Boden des Behälters.

Das erfindungsgemäße Verfahren ist unabhängig vom Salzgehalt und der Zusammensetzung des Härtereiabwassers, wobei stets schadstofffreie Abdämpfe entstehen, die ohne Nachbehandlung in die Umgebungsluft abgegeben werden können.

## Patentansprüche

1. Verfahren zur Entsorgung von Härtereiabwässern mit hoher Cyanid- und/oder Cyanatbelastung, durch Eindampfen der Flüssigkeit in einem Behälter und Beseitigung des verbleibenden Rückstands, wobei zur Eindampfung die Wärmezufuhr über die freie Flüssigkeitsoberfläche erfolgt und über die freie Flüssigkeitsoberfläche ein Luftvolumen geleitet wird, dessen Wasserdampfaufnahmekapazität größer ist als es der durch die Wärmezufuhr freigesetzten Dampfmenge entspricht, dadurch gekennzeichnet, daß die Temperatur in einer Oberflächenschicht der Flüssigkeit von 5 mm auf 50 bis 85°C gehalten wird.

## Claims

1. Process for disposal of hardening shop effluent having a high cyanide and/or cyanate content, by evaporating the liquid in a vessel and eliminating the residue remaining, where, for evaporation, the supply of heat takes place via the free liquid surface and where a volume of air whose water-vapour absorption capacity is greater than corresponds to the amount of vapour liberated by the supply of heat is passed over the free liquid surface, characterised in that the temperature is kept at 50 to 85°C in a surface layer of the liquid of 5 mm.

## Revendications

1. Procédé pour se débarrasser d'eaux résiduaires d'ateliers de trempe, fortement chargées en cyanures et cyanates, par vaporisation du liquide dans un conteneur et élimination du résidu restant, procédé dans lequel la vaporisation se produit par un apport de chaleur sur la surface libre du liquide et dans lequel un flux d'air est guidé sur la surface du liquide, flux d'air dont la capacité d'absorption de vapeur d'eau est supérieure au débit de vapeur dégagée par l'apport de chaleur, caractérisé en ce que la température est maintenue entre 50 et 85°C dans une couche superficielle de liquide de 5 mm.